# EUROPÄISCHE PATENTSCHRIFT

(11) **EP 3 872 590 B1**
(45) Veröffentlichungstag und Bekanntmachung des Hinweises auf die Patenterteilung: **22.06.2022**
(21) Anmeldenummer: 20160200.0
(22) Anmeldetag: 28.02.2020
(51) Int. Cl.: G05B 19/418, B23Q 3/155, B25J 5/00, B23Q 17/09

(54) **VERFAHREN ZUM BETREIBEN MINDESTENS EINES WERKZEUGMASCHINEN-VERWALTUNGSSYSTEMS, EIN WERKZEUGMASCHINEN-VERWALTUNGSSYSTEM SOWIE AUTONOM FAHRENDES WECHSELSYSTEM**
METHOD FOR OPERATING AT LEAST ONE MACHINE TOOL MANAGEMENT SYSTEM, TOOL MACHINE MANAGEMENT SYSTEM AND AUTONOMOUS CHANGING SYSTEM
PROCÉDÉ POUR FAIRE FONCTIONNER AU MOINS UN SYSTÈME DE GESTION D'OUTIL DE MACHINE, SYSTÈME DE GESTION DE MACHINE À OUTIL ET SYSTÈME DE CHANGEMENT AUTONOME

(43) Veröffentlichungstag der Anmeldung: 01.09.2021
(73) Patentinhaber: Schwäbische Werkzeugmaschinen GmbH, 78713 Schramberg-Waldmössingen (DE)
(72) Erfinder: Weisser, Stefan, 78126 Königsfeld (DE)
(74) Vertreter: Schorr, Peter Karl

(56) Entgegenhaltungen:
- WO-A1-2019/053900
- WO-A1-2019/219229
- WO-A2-98/16346
- WO-A2-2019/206806
- DE-A1- 3 614 165
- DE-A1-102013 103 779
- DE-B3-102015 120 058
- US-A1- 2015 316 925

## Beschreibung

Die Erfindung betrifft ein Verfahren zum Betreiben mindestens eines Werkzeugmaschinen-Verwaltungssystems, das mindestens eine Steuereinheit, durch die ein Bedarf mindestens einer Werkzeugmaschine erfassbar ist, das mindestens ein Einstellgerät und das mindestens zwei autonom fahrende und frei im Raum bewegbare Wechselsysteme umfasst, welche jeweils mindestens eine Antriebseinheit zum bewegenden Antreiben des Wechselsystems, welche jeweils mindestens einen Transportabschnitt zum Aufnehmen und/oder Ablegen mindestens eines Werkzeugs und welche jeweils mindestens eine Handlingeinheit zum Aufnehmen und Ablegen des Werkzeugs aufweisen, mit den Schritten
a. Erfassen eines Bedarfs einer Werkzeugmaschine an einem bestimmten Werkzeug durch die Steuereinheit und Berechnen oder Ermitteln eines Transportauftrags durch die Steuereinheit;
b. Erfassen eines zum Ausführen des Transportauftrags geeigneten fahrenden Wechselsystems und Übertragen des Transportauftrags an das Wechselsystem;
c. Einstellen des mindestens einen Werkzeugs durch das mindestens eine Einstellgerät; und
d. Abarbeiten des Transportauftrags durch das erfasste fahrende Wechselsystem durch autonomes Bewegen zur Werkzeugmaschine, wobei das Werkzeug durch die Handlingeinheit aufnehmbar, am Transportabschnitt ablegbar und wieder aufnehmbar sowie an die Werkzeugmaschine übergebbar ist, dadurch gekennzeichnet, dass das Erfassen eines zum Ausführen des Transportauftrags geeigneten autonom fahrenden Wechselsystems ein Berechnen eines, insbesondere elektrischen, Energiebedarfs und ein Erfassen eines, insbesondere elektrischen, Energievorrats eines fahrenden Wechselsystems umfasst.

Ferner betrifft die Erfindung ein Werkzeugmaschinen-Verwaltungssystem, das nach einem derartigen Verfahren betreibbar ist.

In der Produktion und Fertigung werden Werkzeugmaschinen verwendet, um mit Werkzeugen Werkstücke zu bearbeiten. Hierbei führt das Bearbeiten der Werkstücke zu einer steten Abnutzung der Werkzeuge, wodurch diese ausgetauscht werden müssen.

Bei bekannten Verfahren werden neue Werkzeuge meist durch ein Werkzeugeinstellgerät vermessen und die Messwerte durch eine Bedienperson erfasst. Die einzelnen Werkzeuge werden dann auf einem Transportwagen abgelegt und durch eine Bedienperson zur Werkzeugmaschine geschoben.

Allerdings sind jedoch auch Transportsysteme bekannt, bei denen der als autonom fahrendes Wechselsystem ausgebildete Transportwagen selbsttätig zur Werkzeugmaschine fährt.

An der Werkzeugmaschine werden die auszutauschenden Werkzeuge durch eine Bedienperson aus der Werkzeugmaschine entnommen und auf dem Transportwagen abgelegt. Die neuen Werkzeuge werden durch die Bedienperson vom Transportwagen entnommen und händisch in der Werkzeugmaschine abgelegt. Hierbei werden die vom WerkzeugEinstellgerät erfassten Messwerte manuell in der Werkzeugmaschine durch manuelle Eingabe hinterlegt.

Ein gattungsgemäßes Verfahren zum Betreiben eines Werkzeugmaschinen-Verwaltungssystem ist bekannt aus DE 36 14 165 A1.

Die Patentschrift WO2019/206806 A2 offenbart einen autonom fahrenden Werkzeugtransportwagen, der eine elektrische Antriebseinheit mit Energiespeicher umfasst. Das in diesem Dokument offenbarte System beinhaltet des weiteren eine Anzahl Ladestationen zur Aufladung des Energiespeichers.

Aufgabe eines Ausführungsbeispiel der Erfindung ist, ein Verfahren zum Betreiben mindestens eines Werkzeugmaschinen-Verwaltungssystems und ein autonom fahrendes Wechselsystem, das nach einem derartigen Verfahren betreibbar ist vorzuschlagen, bei dem das Zuführen von Gegenständen zu einer Werkzeugmaschine vereinfacht oder stärker automatisiert ist.

Diese Aufgabe wird gelöst durch ein Verfahren zum Betreiben mindestens eines Werkzeugmaschinen-Verwaltungssystems, bei dem das Erfassen eines zum Ausführen des Transportauftrags geeigneten autonom fahrenden Wechselsystems ein Berechnen eines, insbesondere elektrischen, Energiebedarfs und ein Erfassen eines, insbesondere elektrischen, Energievorrats eines fahrenden Wechselsystems umfasst.

Dadurch, dass das Werkzeugmaschinen-Verwaltungssystem mehrere autonom fahrende Wechselsystem umfasst, kann hierdurch das autonom fahrende Wechselsystem erfasst werden, dessen Energievorrat ausreicht, um den Transportauftrag auszuführen.

Dadurch, dass das erfasste autonom fahrende Wechselsystem mindestens eine Handlingeinheit umfasst, durch die ein Werkzeug aufnehmbar und ablegbar ist, ist ein höherer Grad an Unabhängigkeit des Verfahrens von einem Eingriff einer Bedienperson realisiert. Darüber hinaus kann durch das Vorsehen einer Handlingeinheit die Werkzeugmaschine und/oder das Einstellgerät einfach, insbesondere ohne eigene Handlingeinheit, ausgebildet werden.

Unter "autonomes Fahren" und "frei im Raum bewegbar" wird verstanden, dass das Wechselsystem mindestens zwei Freiheitsgrade umfasst, also in einem Raum auf einem Boden sowohl in x- als auch in y-Richtung frei bewegbar ist. Insbesondere wird hierunter verstanden, dass das Wechselsystem nicht schienengeführt ist.

Die Handlingeinheit kann einen Roboter umfassen, der auf dem autonom fahrenden Werkzeugwechselsystem angeordnet ist.

Der Transportabschnitt kann eine Ablagefläche umfassen oder ein magazinartiges Aufbewahrungssystem.

Die Werkzeugmaschine kann ein Werkzeugmagazin umfassen, an das der Werkzeug übergebbar und wieder entnehmbar ist.

Durch die Steuereinheit ist erfassbar, dass an einer Werkzeugmaschine ein Bedarf an einem bestimmten Werkzeug besteht. Das Erfassen eines Bedarfs eines bestimmten Werkzeugs kann durch Kommunikation der Steuereinheit mit der Werkzeugmaschine erfasst werden, wenn die Werkzeugmaschine einen baldigen oder notwendigen Austausch eines Werkzeugs erfasst hat.

Das Abarbeiten eines Transportauftrags kann eine Vielzahl von Schritten umfassen. Hierbei erweist es sich als vorteilhaft, wenn das Abarbeiten des Transportauftrags durch eines der autonom fahrenden Wechselsysteme zumindest einen der nachfolgenden Schritte umfasst:
a. Aufnahme zumindest des mindestens einen Werkzeugs durch die Handlingeinheit;
b. Identifizieren und/oder Anordnen des Werkzeugs am Transportabschnitt des Wechselsystems;
c. autonomes Bewegen zur Werkzeugmaschine;
d. Aufnahme des am Transportabschnitt angeordneten bestimmten Werkzeugs durch die Handlingeinheit; und/oder
e. Übergabe des bestimmten Werkzeugs an die Werkzeugmaschine durch die Handlingeinheit.

Das Identifizieren und Anordnen des Werkzeugs am Transportabschnitt des Wechselsystems kann durch die Handlingeinheit erfolgen. Hierbei kann die Handlingeinheit beispielsweise einen optischen, mechanischen und/oder elektromagnetischen Scanner umfassen, mit dem das Werkzeug identifizierbar ist. Hierbei kann das Werkzeug durch eine Bilderkennung identifiziert werden oder durch das Auslesen eines so genannten RFID-Chips, oder durch das Lesen eines Codes.

Die Übergabe des bestimmten Werkzeugs an die Werkzeugmaschine durch die Handlingeinheit kann beispielsweise unmittelbar durch Übergabe an eine Handlingeinheit der Werkzeugmaschine erfolgen oder durch das Ablegen des Werkzeugs an einer bestimmten Stelle des Transportabschnitts, von der das Werkzeug durch eine Handlingeinheit der Werkzeugmaschine aufnehmbar ist.

Bei einer Weiterbildung des Verfahrens ist vorgesehen, dass das Einstellen des mindestens einen Werkzeugs durch mindestens ein Einstellgerät ein Einstellen und/oder Vermessen des Werkzeugs in oder an einem Magazin am autonom fahrenden Wechselsystem oder in einem Einstellraum umfasst.

Das Einstellen des mindestens einen Werkzeugs im oder am Magazin kann unmittelbar vor dem Aufnehmen durch die Handlingeinheit des Wechselsystems erfolgen oder vor einem Einlagern des Werkzeugs im oder am Magazin.

Die Aufnahme des mindestens einen Werkzeugs durch die Handlingeinheit kann an dem Magazin, an der Werkzeugmaschine, am Einstellgerät, an dem Transportabschnitt oder in dem Einstellraum erfolgen.

Bei einer Weiterbildung letztgenannter Ausführungsform erweist es sich als vorteilhaft, wenn das Einstellen des mindestens einen Werkzeugs ein Speichern der beim Einstellen und/oder Vermessen erfassten Messwerte auf einem am Werkzeug anordenbaren oder angeordneten mechanisch, optisch und/oder elektromagnetisch erfassbaren Identifikationsmittel umfasst.

Hierdurch ist es ermöglicht, die genauen Maße und Werte des Werkzeugs zu erfassen. Solchenfalls können diese Maße und Werte durch das Wechselsystem an die Werkzeugmaschine übertragen werden, wenn das Werkzeug an die Werkzeugmaschine übergeben wird.

Grundsätzlich ist es denkbar, dass die Messwerte optisch ablesbar auf dem Werkzeug angeordnet werden. Dieses kann beispielsweise mittels eines Strichcodes, oder Data Matrix Codes, oder über RFID-Chip erfolgen, durch den unmittelbar auf Werte in einer Datenbank zurückgreifbar ist. In dieser Datenbank können die Messwerte beim Einstellen, Bereitstellen oder Austausch, insbesondere beim Vermessen, abgelegt werden.

Wenn das Identifikationsmittel ein elektromagnetisch erfassbares Identifikationsmittel umfasst, kann dieses beispielsweise einen RFID-Chip umfassen.

Um die erfassten Messwerte des Werkzeugs auf einfache Weise auf die Werkzeugmaschine zu übertragen, kann es bei einem Ausführungsbeispiel des Verfahrens vorgesehen sein, dass nach der Übergabe des Werkzeugs an die Werkzeugmaschine durch die Handlingeinheit ein Einlesen des Identifikationsmittels durch ein Datenauslesegerät der Werkzeugmaschine und ein Speichern der Daten des Werkzeugs in der Maschinensteuerung erfolgt.

Das Einlesen des Identifikationsmittels durch ein Datenauslesegerät, kann beispielsweise optisch und/oder elektromagnetisch erfolgen.

Um die Präzision einer Übergabe des bestimmten Werkzeugs an die Werkzeugmaschine zu erhöhen, erweist es sich als vorteilhaft, wenn ein Verfahrensschritt ein Andocken des fahrenden Wechselsystems an die Werkzeugmaschine vor der Übergabe des bestimmten Werkzeugs an die Werkzeugmaschine durch die Handlingeinheit umfasst und/oder in einem weiteren Verfahrensschritt ein Lösen des an die Werkzeugmaschine angedockten fahrenden Wechselsystems von der Werkzeugmaschine nach Übergabe des bestimmten Werkzeugs an die Werkzeugmaschine durch die Handlingeinheit umfasst.

Darüber hinaus kann das Abarbeiten des Transportauftrags durch das erfasste fahrende Wechselsystem weiterhin zumindest einen der weiteren nachfolgenden Schritte umfassen:
a. Aufnahme und Identifizieren zumindest eines Werkzeugs von der Werkzeugmaschine durch die Handlingeinheit;
b. Anordnen des Werkzeugs durch die Handlingeinheit am Transportabschnitt;
c. Autonomes Bewegen zum Einstellraum; und/oder
d. Übergabe oder Ablegen des Werkzeugs in dem Magazin des Einstellraums.

Das autonome Bewegen zur Werkzeugmaschine durch das erfasste autonom fahrende Wechselsystem kann beispielsweise auch dann erfolgen, wenn kein Bedarf nach einem Werkzeug seitens der Steuereinheit erfasst wurde. Solchenfalls kann das erfasste autonom fahrende Wechselsystem beispielsweise durch die Werkzeugmaschine produzierte Werkstücke aufnehmen. Dieses kann beispielsweise in den zuvor genannten Schritten a. und b. erfolgen.

Das autonome Bewegen zum Einstellraum und/oder die Übergabe und Ablegen des Werkzeugs in den Magazinen des Einstellraums, kann beispielsweise das Ablegen von Werkzeugen umfassen oder die Übergabe und das Ablegen von durch die Werkzeugmaschine gefertigte Werkstücke.

Hierdurch ist die Einsetzbarkeit des autonom fahrenden Wechselsystems weiter erhöht.

Darüber hinaus kann bei einer Weiterbildung des Verfahrens vorgesehen sein, dass die Steuereinheit einen geringen Ladezustand an elektrischer Energie eines autonom fahrenden Wechselsystems erfasst und der Transportauftrag einen Ladeauftrag umfasst, bei dem das autonom fahrende Wechselsystem eine Ladestation anfährt, um den elektrischen Energievorrat aufzufüllen.

Ferner kann bei einem weiteren Ausführungsbeispiel vorgesehen sein, dass das autonom fahrende Wechselsystem nach Abarbeiten eines Transportauftrags automatisch an einer Ladestation andockt, um den Energievorrat aufzufüllen.

Darüber hinaus wird die Aufgabe gelöst durch ein Werkzeugmaschinen-Verwaltungssystem, das nach einem Verfahren mit mindestens einem der zuvor genannten Merkmale betreibbar ist, das mindestens eine Steuereinheit, durch die ein Bedarf mindestens einer Werkzeugmaschine erfassbar ist, das mindestens einen ein Magazin aufweisenden Einstellraum und das mindestens zwei autonom fahrende Wechselsysteme umfasst, welche jeweils mindestens eine Antriebseinheit zum bewegenden Antreiben des Wechselsystems, welche jeweils mindestens einen Transportabschnitt zum Aufnehmen und/oder Ablegen mindestens eines Werkzeugs und welche jeweils mindestens eine Handlingeinheit, zum Aufnehmen und Ablegen des Werkzeugs aufweisen.

Schließlich wird die Aufgabe gelöst durch ein autonom fahrendes Wechselsystem für ein Werkzeugmaschinen-Verwaltungssystem mit mindestens einem der zuvor genannten Merkmale, das nach einem Verfahren mit mindestens einem der zuvor genannten Merkmale betreibbar ist.

Bei einer Weiterbildung des autonom fahrenden Wechselsystems erweist es sich als vorteilhaft, wenn der Transportabschnitt des autonom fahrenden Wechselsystems eine Haftform zum Einlegen des Werkzeugs umfasst.

Hierdurch ist ein Bewegen und/oder Verrutschen des Werkzeugs beim Transport durch das Wechselsystem festgelegt.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Werkzeugmaschinen-Verwaltungssystem und des Verfahrens.

In der Zeichnung zeigt:
- Figur 1: Eine schematische Übersicht einzelner Komponenten des Werkzeugmaschinen-Verwaltungssystems;
- Figur 2: Ein schematisches Ablaufdiagramm einer Ausführungsform des erfindungsgemäßen Verfahrens.

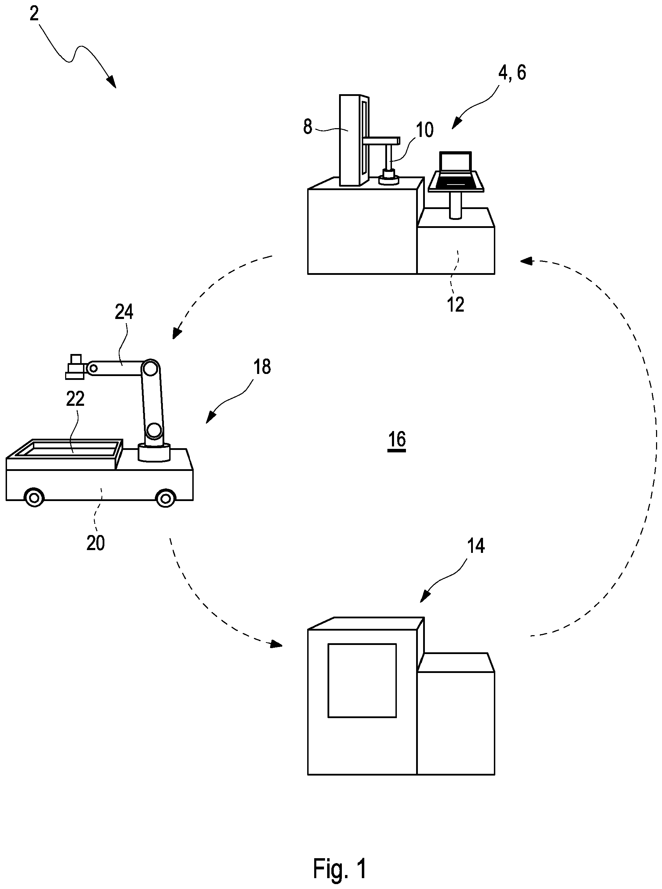

Figur 1 zeigt eine Übersichtsdarstellung eines insgesamt mit dem Bezugszeichen 2 versehenen Werkzeugmaschinen-Verwaltungssystems. Dieses umfasst einen ein Magazin 4 umfassenden Einstellraum 6. Darüber hinaus ist in dem in Figur 1 gezeigten Einstellraum 6 ein Einstellgerät 8 vorgesehen, durch das ein Werkzeug 10 einstellbar und/oder vermessbar ist. Darüber hinaus umfasst das Werkzeugmaschinen-Verwaltungssystem 2 eine Steuereinheit 12, durch die ein Bedarf einer Werkzeugmaschine 14 an einem bestimmten Werkzeug 10 erfassbar ist.

Ferner umfasst das Werkzeugmaschinen-Verwaltungssystem 2 autonom fahrende und frei im Raum 16 bewegbare Wechselsysteme 18, die jeweils eine Antriebseinheit 20 zum Bewegen und Antreiben des Wechselsystems 18 umfasst, das mindestens einen Transportabschnitt 22 zum Aufnehmen und/oder Ablegen mindestens eines Werkzeugs 10 und mindestens eine Handlingeinheit 24 umfasst, durch die der Gegenstand aufnehmbar und ablegbar ist.

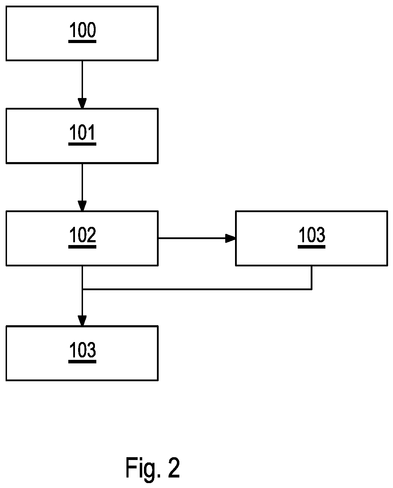

Figur 2 zeigt ein schematisches Ablaufdiagramm einer Ausführungsform des erfindungsgemäßen Verfahrens.

Unter Zuhilfenahme der in Figur 1 dargestellten Komponenten des Werkzeugmaschinen-Verwaltungssystems wird das Verfahren im Folgenden beschrieben:
In einem ersten Schritt 100 wird ein Bedarf einer Werkzeugmaschine 14 an einem bestimmten Werkzeug 10 durch die Steuereinheit 12 erfasst und ein Transportauftrag durch die Steuereinheit 12 berechnet oder ermittelt. In einem hieran anschließenden Schritt 101 wird ein zum Ausführen des Transportauftrags geeignetes autonom fahrendes Wechselsystem 18 erfasst und der Transportauftrag auf das Wechselsystem 18 übertragen.

Hieran anschließend im Schritt 102, parallel hierzu oder vorgelagert, kann das mindestens eine Werkzeug 10, der für die Werkzeugmaschine 14 vorgesehen ist, am Einstellgerät 8 eingestellt oder im Magazin 4 bereitgestellt werden. Hierbei kann das Einstellen ein Einstellen oder Vermessen des Werkzeugs 10 durch mindestens ein Einstellgerät 8 umfassen. Ferner kann in einem parallelen Schritt 103 die Messwerte das durch das Einstellgerät 8 erfassten Werte des Werkzeugs 10 an einem mechanisch, optisch und/oder elektromagnetisch erfassbaren Identifikationsmittel am Werkzeug 10 angeordnet werden.

In einem Schritt 103 erfolgt ein Abarbeiten des Transportauftrags durch das autonom fahrende Wechselsystem 18, wobei das Werkzeug 10 durch die Handlingeinheit 24 aufnehmbar, am Transportabschnitt 22 ablegbar und wieder aufnehmbar sowie an die Werkzeugmaschine 14 übergebbar ist.

Schritt 103 kann unter anderem die Aufnahme des zumindest einen Werkzeugs 10 durch die Handlingeinheit 24 umfassen. Darüber hinaus kann ein Identifizieren und/oder Anordnen des Werkzeugs 10 am Transportabschnitt 22 des Wechselsystems 18 erfolgen.

Ferner kann im Schritt 103 ein autonomes Bewegen des Wechselsystems 18 zur Werkzeugmaschine 14 erfolgen.

Ferner kann im Schritt 103 ein autonomes Bewegen des Wechselsystems 18 zum Einstellgerät 8 erfolgen

Ferner kann im Schritt 103 ein autonomes Bewegen des Wechselsystems 18 zum Magazin 4 erfolgen.

Zur Übergabe des Werkzeugs 10 an die Werkzeugmaschine 14 kann der Schritt 103 ebenfalls eine Aufnahme des am Transportabschnitts 22 angeordneten bestimmten Werkzeugs 10 durch die Handlingeinheit 24 und die Übergabe des bestimmten Werkzeugs 10 an die Werkzeugmaschine 14 durch die Handlingeinheit 24 umfassen.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Werkzeugmaschinen-Verwaltungssystem
- 4: Magazin
- 6: Einstellraum
- 8: Einstellgerät
- 10: Werkzeug
- 12: Steuereinheit
- 14: Werkzeugmaschine
- 16: Raum
- 18: autonom bewegbares Wechselsystem
- 20: Antriebseinheit
- 22: Transportabschnitt
- 24: Handlingeinheit

## Patentansprüche

1. Verfahren zum Betreiben mindestens eines Werkzeugmaschinen-Verwaltungssystems (2), das mindestens eine Steuereinheit (12), durch die ein Bedarf mindestens einer Werkzeugmaschine (14) erfassbar ist, das mindestens ein Einstellgerät (8) und das mindestens zwei autonom fahrende und frei im Raum (16) bewegbare Wechselsysteme (18) umfasst, welche jeweils mindestens eine Antriebseinheit (20) zum bewegenden Antreiben des Wechselsystems (18), welche jeweils mindestens einen Transportabschnitt (22) zum Aufnehmen und/oder Ablegen mindestens eines Werkzeugs (10) und welche jeweils mindestens eine Handlingeinheit (24) zum Aufnehmen und Ablegen des Werkzeugs (10) aufweisen, mit den Schritten
a. Erfassen eines Bedarfs einer Werkzeugmaschine (14) an einem bestimmten Werkzeug (10) durch die Steuereinheit (12) und Berechnen oder Ermitteln eines Transportauftrags durch die Steuereinheit (12);
b. Erfassen eines zum Ausführen des Transportauftrags geeigneten fahrenden Wechselsystems (18) und Übertragen des Transportauftrags an das Wechselsystem (18);
c. Einstellen des mindestens einen Werkzeugs (10) durch das mindestens eine Einstellgerät (8); und
d. Abarbeiten des Transportauftrags durch das erfasste fahrende Wechselsystem (18) durch autonomes Bewegen zur Werkzeugmaschine (14), wobei das Werkzeug (10) durch die Handlingeinheit (24) aufnehmbar, am Transportabschnitt (22) ablegbar und wieder aufnehmbar sowie an die Werkzeugmaschine (14) übergebbar ist;
**dadurch gekennzeichnet, dass** das Erfassen eines zum Ausführen des Transportauftrags geeigneten autonom fahrenden Wechselsystems (18) ein Berechnen eines, insbesondere elektrischen, Energiebedarfs und ein Erfassen eines, insbesondere elektrischen, Energievorrats eines fahrenden Wechselsystems (18) umfasst.

2. Verfahren nach Anspruch 1, **dadurch gekennzeichnet, dass** das Abarbeiten des Transportauftrags durch eines der autonom fahrenden Wechselsysteme (18) zumindest einen der nachfolgenden Schritte umfasst:
a. Aufnahme zumindest des mindestens einen Werkzeugs (10) durch die Handlingeinheit (24);
b. Identifizieren und/oder Anordnen des Werkzeugs (10) am Transportabschnitt (22) des Wechselsystems (18);
c. autonomes Bewegen zur Werkzeugmaschine (14);
d. Aufnahme des am Transportabschnitt (22) angeordneten bestimmten Werkzeugs (10) durch die Handlingeinheit (24); und/oder
e. Übergabe des bestimmten Werkzeugs (10) an die Werkzeugmaschine (14) durch die Handlingeinheit (24).

3. Verfahren nach einem der Ansprüche 1 oder 2, **dadurch gekennzeichnet, dass** das Einstellen des mindestens einen Werkzeugs (10) durch mindestens ein Einstellgerät (8) ein Einstellen und/oder Vermessen des Werkzeugs (10) in oder an einem Magazin (4) oder einem Einstellraum (6) umfasst.

4. Verfahren nach Anspruch 3, **dadurch gekennzeichnet, dass** das Einstellen des mindestens einen Werkzeugs (10) ein Speichern der beim Einstellen und/oder Vermessen erfassten Messwerte auf einem am Werkzeug (10) anordenbaren oder angeordneten mechanisch, optisch und/oder elektromagnetisch erfassbaren Identifikationsmittel umfasst.

5. Verfahren nach mindestens einem der vorhergehenden Ansprüche, **dadurch gekennzeichnet, dass** nach der Übergabe des Werkzeugs (10) an die Werkzeugmaschine (14) durch die Handlingeinheit (24) ein Einlesen des Identifikationsmittels durch ein Datenauslesegerät der Werkzeugmaschine (14) und ein Speichern der Daten des Werkzeugs (10) in der Maschinensteuerung erfolgt.

6. Verfahren nach mindestens einem der vorhergehenden Ansprüche **gekennzeichnet durch** ein Andocken des erfassten fahrenden Wechselsystem (18) an die Werkzeugmaschine (14) vor der Übergabe des bestimmten Werkzeugs (10) an die Werkzeugmaschine (14) durch die Handlingeinheit (24) und/oder ein Lösen des an die Werkzeugmaschine (14) angedockten erfassten fahrenden Wechselsystems (18) von der Werkzeugmaschine (14) nach der Übergabe des bestimmten Werkzeugs (10) an die Werkzeugmaschine (14) durch die Handlingeinheit (24).

7. Verfahren nach mindestens einem der vorhergehenden Ansprüche, **dadurch gekennzeichnet, dass** das Abarbeiten des Transportauftrags durch das autonom fahrende Wechselsystem (18) weiterhin zumindest einen der nachfolgenden Schritte umfasst:
a. Aufnahme und Identifizieren zumindest des Werkzeugs(10) von der Werkzeugmaschine (14) durch die Handlingeinheit (24);
b. Anordnen des Werkzeugs (10) durch die Handlingeinheit (24) am Transportabschnitt (22);
c. Autonomes Bewegen zum Einstellraum (6); und/oder
d. Übergabe oder Ablegen des Werkzeugs (10) in dem Magazin (4) des Einstellraums (6).

8. Werkzeugmaschinen-Verwaltungssystem (2), das nach einem Verfahren nach einem der Ansprüche 1 bis 7 betreibbar ist, das mindestens eine Steuereinheit (12), durch die ein Bedarf mindestens einer Werkzeugmaschine (14) erfassbar ist, das mindestens ein Einstellgerät (8) aufweist und das mindestens zwei autonom fahrende Wechselsysteme (18) umfasst, welche jeweils mindestens eine Antriebseinheit (20) zum bewegenden Antreiben des Wechselsystems (18), welche jeweils mindestens einen Transportabschnitt (22) zum Aufnehmen und/oder Ablegen mindestens eines Werkzeugs (10) und welche jeweils mindestens eine Handlingeinheit (24), zum Aufnehmen und Ablegen des Werkzeugs (10) aufweist.

## Claims

1. Method for operating at least one machine tool management system (2), which comprises at least one control unit (12), by means of which a need of at least one machine tool (14) can be detected, which comprises at least one setting device (8) and which comprises at least two self-driving changing systems (18) that are freely moveable in space (16), which respectively have at least one drive unit (20) for moveably driving the changing system (18), which respectively have at least one transport section (22) for picking up and/or putting down at least one tool (10) and which respectively have at least one handling unit (24) for picking up and putting down the tool (10), having the steps
a. detecting a need of a machine tool (14) on a specific tool (10) by the control unit (12) and calculating or determining a transport order by the control unit (12);
b. detecting a moving changing system (18) suitable for carrying out the transport order and transmitting the transport order to the changing system (18);
c. setting the at least one tool (10) by the at least one setting device (8); and
d. processing the transport order by the detected moving changing system (18) by autonomously moving to the machine tool (14), wherein the tool (10) can be picked up by the handling unit (24), put down on the transport section (22) and picked up again as well as passed to the machine tool (14);
**characterised in that** detecting a self-driving changing system (18) suitable for carrying out the transport order comprises calculating an energy need, in particular an electrical one, and detecting an energy reserve, in particular an electrical one, of a moving changing system (18).

2. Method according to Claim 1, **characterised in that** processing the transport order by one of the autonomously moving changing systems (18) comprises at least one of the following steps:
a. picking up at least the at least one tool (10) by the handling unit (24);
b. identifying and/or arranging the tool (10) on the transport section (22) of the changing system (18);
c. autonomously moving to the machine tool (14);
d. picking up the specific tool (10) arranged on the transport section (22) by the handling unit (24); and/or
e. passing the specific tool (10) to the machine tool (14) by the handling unit (24).

3. Method according to one of Claims 1 or 2, **characterised in that** setting the at least one tool (10) by at least one setting device (8) comprises setting and/or measuring the tool (10) in or on a tray (4) or a setting space (6).

4. Method according to Claim 3, **characterised in that** setting the at least one tool (10) comprises saving the measured values detected during setting and/or measurement on a mechanically, optically and/or electromagnetically detectable identification means that can be arranged or is arranged on the tool (10).

5. Method according to at least one of the preceding claims, **characterised in that** after passing the tool (10) to the machine tool (14) by the handling unit (24), the identification means is read by a data reading device of the machine tool (14) and the data of the tool (10) is stored in the machine control system.

6. Method according to at least one of the preceding claims, **characterised by** docking the detected moving changing system (18) to the machine tool (14) prior to passing the specific tool (10) to the machine tool (14) by the handling unit (24) and/or loosening the detected moving changing system (18) docked to the machine tool (14) from the machine tool (14) after passing the specific tool (10) to the machine tool (14) by the handling unit (24).

7. Method according to at least one of the preceding claims, **characterised in that** processing the transport order by the autonomously moving changing system (18) further comprises at least one of the following steps:
a. picking up and identifying at least the tool (10) by the machine tool (14) by the handling unit (24);
b. arranging the tool (10) by the handling unit (24) on the transport section (22);
c. autonomously moving to the setting space (6); and/or
d. passing or putting down the tool (10) in the tray (4) of the setting space (6).

8. Machine tool management system (2), which can be operated according to a method according to one of Claims 1 to 7, which comprises at least one control unit (12), by means of which a need of at least one machine tool (14) can be detected, which has at least one setting device (8) and which comprises at least two self-driving changing systems (18), which respectively have at least one drive unit (20) for moveably driving the changing system (18), which respectively have at least one transport section (22) for picking up and/or putting down at least one tool (10) and which respectively have at least one handling unit (24) for picking up and putting down the tool (10).

## Revendications

1. Procédé d'exploitation d'au moins un système de gestion (2) de machines-outils, qui comprend au moins une unité de commande (12), couvrant un besoin d'au moins une machine-outil (14), et comprenant au moins un appareil de réglage (8) ainsi que deux systèmes mobiles de changement à fonctionnement (18) autonome faciles à déplacer (16), qui présentent chacun au moins une unité d'entraînement (20) pour un entraînement mobile du système de changement (18), et chacun au moins une section de transport (22) pour saisir et/ou déposer au moins un outil (10), et enfin chacun une unité de manutention (24) pour saisir et déposer l'outil (10), avec les étapes
a. Détection d'un besoin d'une machine-outil (14) sur un outil déterminé (10) à l'aide de l'unité de commande (12) et calcul ou détermination d'un ordre de transport à l'aide de l'unité de commande (12);
b. Détection d'un système de changement en marche adapté à l'exécution de l'ordre de transport (18) et transmission de l'ordre de transport au système de changement (18);
c. Réglage d'au moins un outil (10) au moyen d'au moins un appareil de réglage (8); et
d. Traitement de l'ordre de transport par le système de changement (18) en marche détecté par un déplacement autonome vers la machine-outil (14), selon lequel l'outil (10) peut être saisi par l'unité de manutention (24), déposé sur la section de transport (22), et peut être à nouveau saisi et transféré vers la machine-outil (14);
**caractérisé par le fait que** la détection d'un système de changement (18) à fonctionnement autonome adapté à l'exécution de l'ordre de transport comprend un calcul d'un besoin énergétique, surtout électrique, et une détection d'une réserve énergétique, surtout électrique, d'un système de changement (18) en marche.

2. Procédé selon la revendication 1, **caractérisé par le fait que** le traitement de l'ordre de transport par l'un des systèmes de changement (18) à fonctionnement autonome comprend au moins l'une des étapes suivantes :
a. Préhension d'au moins un outil (10) par l'unité de manutention (24);
b. Identification et/ou placement de l'outil (10) sur la section de transport (22) du système de changement (18);
c. Déplacement autonome vers la machine-outil (14);
d. Préhension de l'outil concerné (10) placé sur la section de transport (22) par l'unité de manutention (24); et/ou
e. Transfert de l'outil (10) concerné à la machine-outil (14) par l'unité de manutention (24).

3. Procédé selon l'une des revendications 1 ou 2, **caractérisé par le fait que** le réglage d'au moins un outil (10) par au moins un appareil de réglage (8) comprend un réglage et/ou une mesure de l'outil (10) dans ou sur un magasin (4) ou un local de rangement (6).

4. Procédé selon la revendication 3, **caractérisé par le fait que** le réglage d'au moins un outil (10) comprend un enregistrement des valeurs de mesure détectées lors du réglage et/ou de la mesure sur un moyen d'identification détectable par voie optique et/ou électromagnétique, et positionnable ou placé sur un outil (10).

5. Procédé selon au moins une des revendications précédentes, **caractérisé par le fait qu'**après le transfert de l'outil (10) à la machine-outil (14) par l'unité de manutention (24), une lecture du moyen d'identification est effectuée par un lecteur de données de la machine-outil (14) et les données de l'outil (10) sont enregistrées dans la commande de la machine.

6. Procédé selon au moins une des revendications précédentes, **caractérisé par** un amarrage du système de changement (18) en marché détecté sur la machine-outil (14) avant le transfert de l'outil concerné (10) sur la machine-outil (14) par l'unité de manutention (24), et/ou un desserrage sur la machine-outil (14) du système de changement (18) en marche détecté et amarré de la machine-outil (14) après le transfert de l'outil concerné (10) à la machine-outil (14) par l'unité de manutention (24).

7. Procédé selon au moins l'une des revendications suivantes, **caractérisé par le fait que** le traitement de l'ordre de transport par le système de changement (18) à fonctionnement autonome comprend aussi au moins l'une des étapes suivantes :
a. Préhension et identification au moins de l'outil (10) de la machine-outil (14) par l'unité de manutention (24);
b. Placement de l'outil (10) par l'unité de manutention (24) sur la section de transport (22) ;
c. Déplacement autonome vers le local de rangement (6); et/ou
d. Transfert ou rangement de l'outil (10) dans le magasin (4) du local de rangement (6).

8. Système de gestion de machines-outils (2), qui est exploitable selon un procédé conforme à l'une des revendications 1 à 7, qui comprend au moins une unité de commande (12), couvrant un besoin d'au moins une machine-outil (14), et au moins un appareil de réglage (8) ainsi que deux systèmes de changement à fonctionnement (18) autonome, qui présentent chacun au moins une unité d'entraînement (20) pour un entraînement mobile du système de changement (18), et chacun au moins une section de transport (22) pour saisir et/ou ranger au moins un outil (10), et enfin chacun une unité de manutention (24) pour saisir et ranger l'outil (10).
